# EUROPEAN PATENT APPLICATION

(11) **EP 4 700 916 A1**
(43) Date of publication of application: **25.02.2026**
(21) Application number: 24894570.1
(22) Date of filing: 19.11.2024
(51) Int. Cl.: H01M 10/6557, H01M 10/613, H01M 50/204, H01M 50/242, H01M 50/342

(54) **BATTERY ASSEMBLY AND BATTERY PACK**

(30) Priority: 20.11.2023 KR 20230161350; 23.10.2024 KR 20240146008
(71) Applicant: LG Energy Solution, Ltd., Seoul 07335 (KR)
(72) Inventor: HWANG, Taewon, Daejeon 34122 (KR); KANG, Jongmo, Daejeon 34122 (KR); SEO, Sung Won, Daejeon 34122 (KR); LEE, Inje, Daejeon 34122 (KR); CHUNG, Seyun, Daejeon 34122 (KR)
(74) Representative: Plasseraud IP
(86) International application number: PCT/KR2024/018280
(87) International publication number: WO 2025/110678

(57) **Abstract**

The present application may provide a battery assembly comprising a plurality of battery cells and a cooling member interposed between the plurality of battery cells, wherein the cooling member comprises: a main body portion including a coolant flow path provided to allow a coolant to flow therein; an inlet portion communicating with the coolant flow path and provided to introduce the coolant; and an outlet portion communicating with the coolant flow path and provided to discharge the coolant, and the inlet portion and the outlet portion extend from one side of the main body portion corresponding to the venting direction of the plurality of battery cells.

## Description

### TECHNICAL FIELD

### CROSS-REFERENCE TO RELATED APPLICATIONS

This application is based on and claims priority from Korean Patent Application Nos. 10-2023-0161350 and 10-2024-0146008, filed on November 20, 2023 and October 23, 2024, respectively, with the Korean Intellectual Property Office, the disclosure of which is incorporated herein in its entirety by reference.

### TECHNICAL FIELD

The present application relates to a battery assembly and a battery pack. Specifically, the present application relates to a battery assembly and a battery pack including the battery assembly.

### BACKGROUND

Recently, there has been an increasing demand for mobile devices such as smartphones, tablet PCs, and wireless earphones. In addition, as the development of electric vehicles, energy storage batteries, robots, and satellites accelerates, research is actively being conducted on high-performance secondary batteries that allow for repeated charging and discharging.

Currently, commercially available secondary batteries include nickel-cadmium batteries, nickel-metal hydride batteries, nickel-zinc batteries, and lithium secondary batteries. Among the secondary batteries, lithium secondary batteries, which barely have memory effect compared to nickel-based secondary batteries, offer various advantages of being free to charge and discharge, having a very low self-discharge rate, and having high energy density.

High-performance secondary batteries may generate heat during operation. When the generated heat is not handled in a timely manner, functional problems of the secondary batteries may occur, and the heat may accumulate, causing safety problems. Accordingly, it is important to properly handle the generated heat during the operation of the secondary batteries.

### SUMMARY OF THE INVENTION

### THECHNICAL PROBLEM

The present application provides a battery assembly and battery pack, capable of cooling battery cells to minimize performance degradation or safety issues caused by heat. In addition, the present application provides a battery assembly and battery pack, capable of preventing or suppressing issues caused by swelling while cooling battery cells. Furthermore, the present application provides a battery assembly and battery pack, capable effectively performing cooling of battery cells by appropriately utilizing spaces.

### SOLUTION TO PROBLEM

According to an embodiment of the present application, a battery assembly may include multiple battery cells, and a cooling member interposed between the multiple battery cells. The cooling member may include a main body including a coolant flow path configured to allow coolant to flow therein, an inlet configured to communicate with the coolant flow path and allow the coolant to flow in, and an outlet configured to communicate with the coolant flow path and allow the coolant to flow out. The inlet and the outlet may extend from one surface of the main body corresponding to a venting direction of the multiple battery cells.

In the battery assembly according to an embodiment of the present application, the venting direction of the multiple battery cells may correspond to a direction in which a vent hole is formed in a housing that covers the multiple battery cells, in which the vent hole is configured to release venting gas generated from at least one of the multiple battery cells.

In the battery assembly according to an embodiment of the present application, the multiple battery cells may include a first cell assembly and a second cell assembly, each of which includes two or more battery cells, and the cooling member may be disposed between the first cell assembly and the second cell assembly.

In the battery assembly according to an embodiment of the present disclosure, each of the first cell assembly and the second cell assembly may have a ratio (L_{C}/L_{T}) of a long side length (L_{C}) to a short side length (L_{T}) that ranges from 1 to 100, or may have a battery capacity that ranges from 50 Ah to 1,000 Ah.

In the battery assembly according to an embodiment of the present disclosure, the main body may further include a gas pocket.

In the battery assembly according to an embodiment of the present disclosure, the inlet and the outlet may extend in the same direction from one surface of the main body.

In the battery assembly according to an embodiment of the present disclosure, the inlet and the outlet may protrude beyond one surface of the multiple battery cells positioned in parallel to one surface of the main body.

In the battery assembly according to an embodiment of the present disclosure, multiple cooling members may be provided, the inlets of respective multiple cooling members may be arranged in a row such that at least a portion of the inlets face each other, and the outlets of respective multiple cooling members may be arranged in a row such that at least a portion of the inlets face each other.

In the battery assembly according to an embodiment of the present disclosure, at least a portion of the cooling member may be in contact with a battery cell adjacent thereto.

In the battery assembly according to an embodiment of the present disclosure, the cooling member may include an elastic material.

In the battery assembly according to an embodiment of the present disclosure, the coolant flowing through the coolant flow path may absorb heat generated by at least a portion of the multiple battery cells.

According to an embodiment of the present disclosure, a battery may include a housing that accommodates a cooling member interposed between the plurality of battery cells. The cooling member may include a main body including a coolant flow path configured to allow coolant to flow therein, an inlet configured to communicate with the coolant flow path and allow the coolant to flow in, and an outlet configured to communicate with the coolant flow path and allow the coolant to flow out. The housing may include a first hole provided on one surface to allow at least a portion of the inlet to penetrate therethrough, and a second hole provided on one surface to allow at least a portion of the outlet to penetrate therethrough.

In the battery assembly according to an embodiment of the present disclosure, the battery assembly may further include a cover member configured to at least a portion of the housing.

In the battery assembly according to an embodiment of the present disclosure, the first hole and the second hole are provided on one same surface of the housing.

In the battery assembly according to an embodiment of the present disclosure, the housing may further include a third hole different from the first hole and the second hole.

According to an embodiment of the present disclosure, a battery pack may include a battery assembly including multiple battery cells and a cooling member interposed between the multiple battery cells, a pack housing configured to provide an accommodation space that accommodates the battery assembly, a coolant inlet pipe configured to introduce coolant into the battery assembly, and a coolant outlet pipe configured to discharge the introduced coolant to an outside. The cooling member may include a main body including a coolant flow path configured to allow the coolant to flow therein, an inlet configured to communicate with the coolant flow path and allow the coolant to flow in, and an outlet configured to communicate with the coolant flow path and allow the coolant to flow out. The coolant flow path may communicate with the coolant inlet pipe and the coolant outlet pipe.

In the battery pack according to an embodiment of the present application, multiple battery assemblies may be provided in plurality, and a coolant flow path of one of the multiple battery assemblies may communicate with a coolant flow path of another battery assembly through at least one of the coolant inlet pipe and the coolant outlet pipe.

In the battery pack according to an embodiment of the present application, the pack housing may include a pack outer wall frame surrounding at least a portion of the battery assembly, and a pack support frame supporting the battery assembly within the accommodation space. The inlet and the outlet may extend from one surface of the main body in a direction corresponding to a venting direction of the multiple battery cells. The inlet and the outlet may be provided in a separation space formed between the battery assembly and the pack support frame.

According to an embodiment of the present application, the battery pack may further include a seating surface configured to seat the battery assembly thereon. The seating surface may include a first seating surface hole configured to allow at least a portion of the inlet to penetrate therethrough, and a second seating surface hole configured to allow at least a portion of the outlet to penetrate therethrough. The seating surface may be spaced a predetermined distance from the pack support frame.

In the battery pack according to an embodiment of the present application, the seating surface may further include a third seating surface hole different from the first seating surface hole and the second seating surface hole.

### EFFECT OF THE INVENTION

The present application may minimize performance degradation or safety issues caused by heat, by cooling the battery cells. In addition, the present application may prevent or suppress problems caused by swelling of battery cells while cooling the battery cells. Furthermore, the present application may more effectively cool the battery cells through appropriate use of space.

### BRIEF DESCRIPTION OF THE DRAWINGS

The drawings presented in the present application correspond to examples of the application, and the proportions of width, length, or thickness (or height) of each component are provided to explain the present disclosure in detail and may differ from actual proportions. In the coordinate system illustrated in the drawings, each axis may be perpendicular to the others, and the directions pointed by the arrows represent the positive (+) directions, while the opposite directions (the directions rotated by 180 degrees) represent the negative (-) directions.
FIG. 1 is a perspective view illustrating at least a portion of a battery assembly according to an embodiment of the present application.
FIG. 2 is a perspective view illustrating at least a portion of multiple cooling members according to an embodiment of the present application.
FIG. 3 is a cross-sectional view (YZ plane) illustrating at least a portion of a cooling member according to an embodiment of the present application.
FIGS. 4 to 6 are cross-sectional views (XZ plane) taken along line A-A' of FIG. 2, respectively, in each of which at least a portion of a cooling member according to an embodiment of the present application is illustrated.
FIG. 7 is a cross-sectional view (XZ plane) illustrating at least a portion of a battery assembly according to an embodiment of the present application.
FIG. 8 is an exploded perspective view illustrating at least a portion of a battery assembly according to an embodiment of the present application.
FIG. 9 is a perspective view illustrating at least a portion of a battery assembly according to an embodiment of the present application.
FIG. 10 is an exploded perspective view illustrating at least a portion of a battery assembly according to an embodiment of the present application.
FIG. 11 is a perspective view illustrating at least a portion of a battery assembly according to an embodiment of the present application.
FIGS. 12 and 13 are enlarged views of portion P of FIG. 10.
FIG. 14 is an exploded perspective view illustrating at least a portion of a battery pack according to an embodiment of the present application.
FIG. 15 is a perspective view illustrating at least a portion of a battery pack according to an embodiment of the present application, in which coolant pipes are illustrated.
FIG. 16 is a cross-sectional view (XY plane) illustrating at least a portion of a battery pack according to an embodiment of the present application, in which coolant pipes are illustrated.
FIG. 17 is a perspective view illustrating at least a portion of the battery pack 1 according to an embodiment of the present application, in which the bottom side is illustrated.
FIG. 18 is a perspective view illustrating at least a portion of a battery pack according to an embodiment of the present application, in which coolant pipes are illustrated.
FIG. 19 is a cross-sectional view (XY plane) illustrating at least a portion of a battery pack according to an embodiment of the present application, in which coolant pipes are illustrated.
FIG. 20 is a perspective view illustrating at least a portion of a battery pack according to an embodiment of the present application, in which coolant pipes are illustrated.
FIG. 21 is a cross-sectional view (XY plane) illustrating at least a portion of a battery pack according to an embodiment of the present application, in which coolant pipes are illustrated.
FIG. 22 is a perspective view illustrating at least a portion of a battery pack according to an embodiment of the present application.
FIG. 23 is a perspective view illustrating at least a portion of the battery pack according to an embodiment of the present application, illustrating that a cross member is provided.
FIG. 24 is an exploded perspective view illustrating at least a portion of the battery pack according to an embodiment of the present application, in which a seating surface of the battery pack is illustrated.
FIG. 25 is a cross-sectional view (YZ plane) illustrating at least a portion of a battery pack according to an embodiment of the present application, illustrating that an auxiliary member is provided.
FIG. 26 is a perspective view illustrating the auxiliary member in the battery pack according to an embodiment of the present application.
FIG. 27 is an exploded perspective view illustrating at least a portion of a battery assembly according to an embodiment of the present application.
FIG. 28 is an exploded perspective view illustrating at least a portion of the battery pack according to an embodiment of the present application, in which a seating surface of the battery pack is illustrated.
FIG. 29 is a cross-sectional view (XY plane) illustrating at least a portion of the battery assembly according to an embodiment of the present application in which a portion of the housing is illustrated.
FIG. 30 is a view illustrating at least a portion of a battery pack according to an embodiment of the present application, in which a cross-sectional view along line B-B' in FIG. 29 is illustrated.
FIG. 31 is a cross-sectional view (XZ plane) illustrating at least a portion of a battery pack according to an embodiment of the present application, illustrating that an auxiliary member is provided.

### DETAILED DESCRIPTION

Prior to the detailed description of the present application, it should be noted that the terms or words used in the specification and claims are not necessarily limited to their common or dictionary meanings. In addition, based on the principle that an inventor may define the concept of terms to best describe his/her own invention, it may be necessary to interpret the terms in a meaning and concept that are in conformity with the technical spirit of the invention. The embodiments described in the specification and configurations illustrated in the drawings represent examples of the present application and may not represent all of the technical ideas of the present application. Accordingly, at the time of filing this application, there may be various equivalents and modifications that may replace these examples.

The same reference numbers or symbols used in each drawing attached to this specification may denote parts or components that perform substantially the same function. For convenience of description and understanding, the same reference numbers or symbols may be used in different embodiments. That is, even if components having the same reference numbers are illustrated in multiple drawings, the multiple drawings may not all represent a single embodiment.

In the following description, singular expressions may include plural meanings unless the context clearly indicates otherwise. It should be understood that the terms such as "include" or "comprise" are intended to indicate the presence of features, numbers, steps, operations, components, parts, or combinations thereof described in the specification, and are not intended to exclude in advance the possibility of the presence or addition of one or more other features, numbers, steps, operations, components, parts, or combinations thereof.

In addition, terms such as upper, lower, top, bottom, side, front, and rear in the following description are expressed based on the direction illustrated in the drawings, and may be expressed differently if the direction of the subject changes.

In the specification and claims, terms including ordinals such as "first" and "second," may be used to distinguish between components. These ordinals are used to distinguish between identical or similar components, and the use of these ordinals should not be interpreted as limiting the meaning of the terms. For example, components referred to with ordinals should not be interpreted in a restricted manner in terms of usage order or arrangement based on their numbers. If necessary, respective ordinals may be used interchangeably.

Hereinafter, embodiments of the present application will be described in detail with reference to the accompanying drawings. However, the spirit of the present application may not be limited to the presented embodiments. For example, a person ordinarily skilled in the art who understands the spirit of the present application may propose other embodiments within the scope of the idea of the present application through, for example, adding, modifying, or removing components, but such embodiments would also be considered to fall within the scope of the present application. For example, the shapes and sizes of elements in the drawings may be exaggerated for clearer description.

In this specification, the term "battery" may be used interchangeably with the term "cell." In addition, "battery" or "cell" may be a general term referring to a battery cell as a unit, a battery module containing battery cells, or a battery pack.

Unless otherwise specified in this specification, the SI unit system may be used.

The term "room temperature" as used in this specification refers to the natural ambient temperature without heating or cooling. For example, it may refer to a temperature within the range of 10°C to 30°C, such as about 15°C or higher, about 18°C or higher, about 20°C or higher, about 23°C or higher, about 27°C or lower, or 25°C. Unless otherwise specified in this specification, the unit of temperature is degrees Celsius (°C).

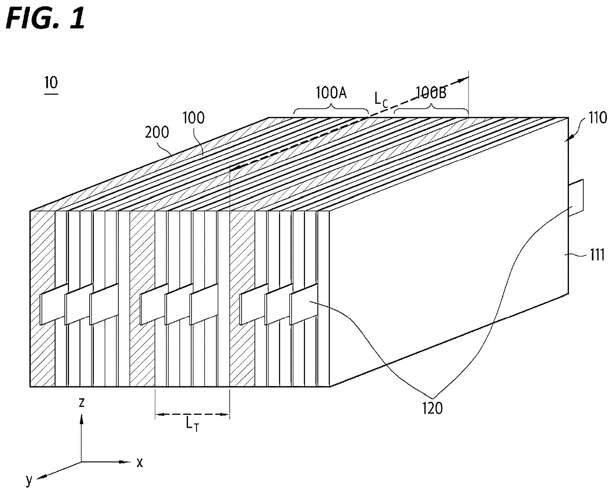

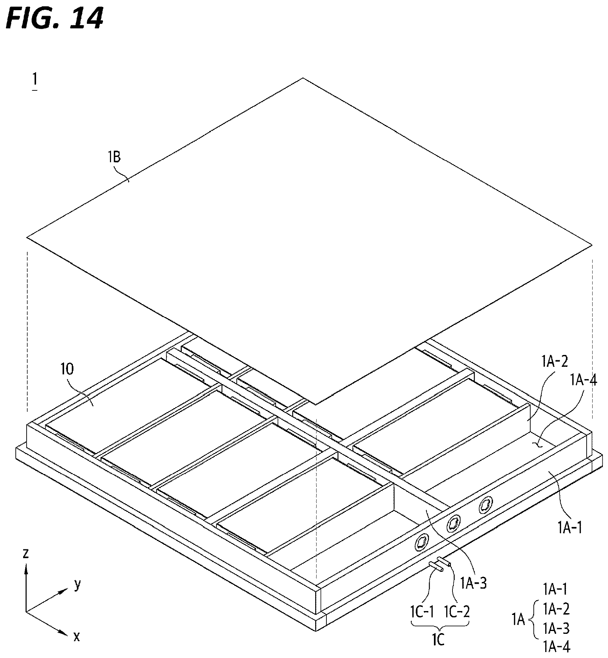

FIG. 1 is a perspective view illustrating at least a portion of a battery assembly 10 according to an embodiment of the present application. FIG. 14 is an exploded perspective view illustrating at least a portion of a battery pack 1 according to an embodiment of the present application.

The present application may provide a battery assembly 10 and a battery pack 1 capable of cooling battery cells 100 to minimize performance degradation or safety issues caused by heat.

The present application may also provide a battery assembly 10 and a battery pack 1 capable of preventing or suppressing issues caused by swelling while simultaneously cooling battery cells 100.

The present application may provide a battery assembly 10 and a battery pack 1 capable of performing cooling of the battery cells 100 more effectively by utilizing space.

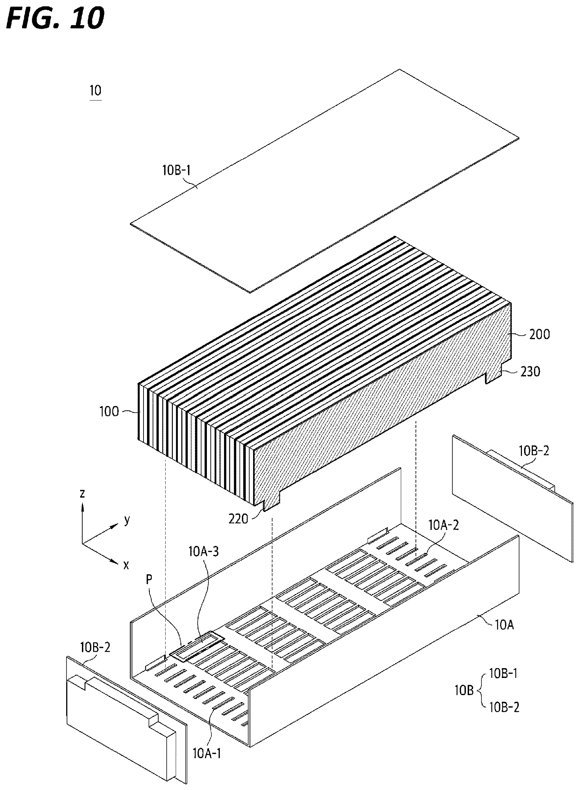

The term "battery assembly 10" as used in this specification is sufficient if it includes multiple battery cells 100, and may include a stack of battery cells 100 in which the battery cells 100 are stacked. The term may also include a concept of a so-called battery module in which one or more battery cells 100 are built into a housing 10A (see FIG. 10) to prevent or suppress external impact.

The battery assembly 10 according to an embodiment of the present application may include multiple battery cells 100. The battery cells 100 may each include a cell assembly 110 and a cell tab 120 protruding from the cell assembly 110.

In an example, the cell assembly 110 may include an electrode inside an exterior material. For example, the electrode may include at least one of a cathode and an anode.

For example, the cathode refers to a reduction electrode that receives electrons from an electron transfer material when the battery cell 100 discharges, while the anode refers to an oxidation electrode that transfers electrons to the electron transfer material when the battery cell 100 discharges. The electron transfer material may be lithium ions (Li⁺) or sodium ions (Na⁺).

In an example, a number of cell tabs 120 may be provided corresponding to the number of electrodes included in the cell assembly 110, and may be electrically connected to respective electrodes. For example, the cell tabs 120 may each include a cathode cell tab 120 electrically connected to the cathode within the cell assembly 110 and an anode cell tab 120 electrically connected to the anode within the cell assembly 110.

For example, the cathode cell tab 120 and anode cell tab 120 may protrude in the same direction, may protrude in different directions, respectively, for example, in opposite directions (about 180 degrees) to each other.

As used in this specification, the term "electrically connected" may refer to a state in which, when objects to be connected are connected by connecting means, an electrical circuit is formed to allow current to flow to each object to be connected. The connecting means is not particularly limited as long as it is capable of electrical connection; but may be, for example, direct contact between the objects to be connected or a wire that allows current to flow therethrough.

In an example, a battery cell 100 may be classified according to the shape of the cell assembly 110. For example, the battery cell 100 may be classified as prismatic, cylindrical, coin, or pouch type based on the shape of the cell assembly 110. A pouch-type battery cell 100 may be suitable for the present application, but this is merely an exemplary description. Various embodiments of the present disclosure are not limited to a specific type.

In an example, a cell assembly 110 may include a separator capable of preventing or suppressing short circuits between the cathode and anode and allow the passage of an electron transfer material. The electron transfer material may be, for example, lithium ions (Li⁺) or sodium ions (Na⁺).

In another example, a cell assembly 110 may include therein an electrolyte. The electrolyte may be liquid or solid at room temperature. When the electrolyte is liquid at room temperature, it may be referred to as an electrolytic solution. The electrolytic solution may also be filled within the cell assembly 110 and may function as a medium to facilitate the movement of the electron transfer material.

For example, when the electrolyte is solid at room temperature, it may be referred to as a solid electrolyte. The solid electrolyte may be provided as a solid electrolyte layer between the cathode and anode, and in this case, the solid electrolyte layer may also serve as the separator described above.

In the battery assembly 10 according to an embodiment of the present application, at least a portion of the multiple battery cells 100 may be stacked in one direction.

For example, referring to FIG. 1, at least a portion of the battery cells 100 may be stacked in the x-axis direction. At least a portion of the battery cells 100 may be stacked to improve spatial efficiency.

In an example, the stacked battery cells 100 may be positioned such that respective stacking surfaces 111 face one another.

The battery assembly 10 according to an example of the present application may include a cooling member 200 interposed between the multiple battery cells 100. As long as the cooling member 200 is interposed between the multiple battery cells 100, its position is not particularly limited.

In an example, the cooling member 200 may not only be interposed between the multiple battery cells 100 but may also be configured to partially surround a battery cell 100 located at an outermost position among the multiple battery cells 100.

For example, the cooling member 200 may be disposed to partially surround a battery cell 100 at the outermost position to distinguish the battery at the outermost position from the exterior.

In an example, at least a portion of the cooling member 200 may be in contact with adjacent battery cells 100. When at least a portion of the cooling member 200 is in contact with adjacent battery cells 100, it may be possible to cool the battery cells 100 more effectively while preventing or suppressing issues caused by swelling.

In the battery assembly 10 according to an embodiment of the present application, the multiple battery cells 100 may include a first cell assembly 100A and a second cell assembly 100B, each of which may include two or more battery cells 100.

Meanwhile, the first cell assembly 100A and the second cell assembly 100B may each be stacked at least partially in one direction. In the battery assembly 10, the cooling member 200 may be interposed between the first cell assembly 100A and the second cell assembly 100B. This arrangement enables cooling of the battery cells 100 while preventing or suppressing issues caused by swelling.

In an embodiment, the battery assembly 10 may include multiple cell assemblies, including the first cell assembly 100A and the second cell assembly 100B, according to a predetermined criterion.

For example, each cell assembly may be configured such that its long side length L_{C} and short side (or stacking side) length L_{T} have a predetermined ratio. In an example, the first cell assembly 100A and the second cell assembly 100B may have a ratio L_{C}/L_{T} of the long side length L_{C} to the short side length L_{T} in the range of 1 to 100, 5 to 80, 8 to 70, 10 to 60, 12 to 50, 14 to 40, or 16 to 35.

For example, each cell assembly may be independently configured to satisfy a predetermined range of battery capacity conditions. In an example, the first cell assembly 100A and the second cell assembly 100B may each have a battery capacity in the range of 50 Ah to 1,000 Ah, 70 Ah to 900 Ah, 80 Ah to 800 Ah, 90 Ah to 700 Ah, 100 Ah to 600 Ah, 110 Ah to 550 Ah, 120 Ah to 500 Ah, 130 Ah to 450 Ah, 140 Ah to 400 Ah, or 150 Ah to 350 Ah.

In an example, the first cell assembly 100A and the second cell assembly 100B may each have a ratio L_{C}/L_{T} of the long side length L_{C} to the short side length L_{T} in the range of 1 to 100, 5 to 80, 8 to 70, 10 to 60, 12 to 50, 14 to 40, or 16 to 35, or each cell assembly may have a battery capacity in the range of 50 Ah to 1,000 Ah, 70 Ah to 900 Ah, 80 Ah to 800 Ah, 90 Ah to 700 Ah, 100 Ah to 600 Ah, 110 Ah to 550 Ah, 120 Ah to 500 Ah, 130 Ah to 450 Ah, 140 Ah to 400 Ah, or 150 Ah to 350 Ah.

In the battery assembly 10 according to an example of the present application, multiple cooling members 200 may be provided.

For instance, among the multiple cooling members 200, at least a portion may be interposed between the multiple battery cells 100, while others may be configured to partially surround the battery cells 100 located at the outermost positions among the multiple battery cells 100.

In an example, at least a portion of the multiple cooling members 200 may be interposed between the first cell assembly 100A and the second cell assembly 100B.

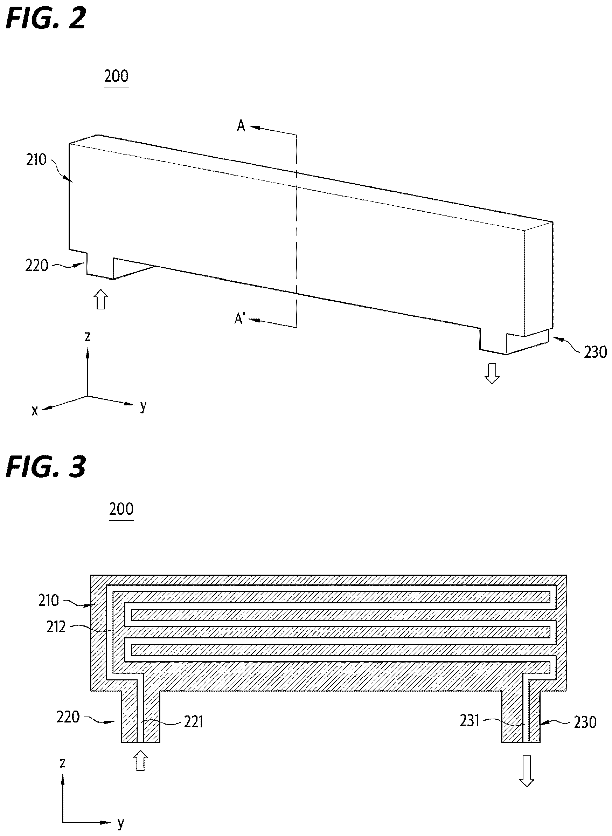

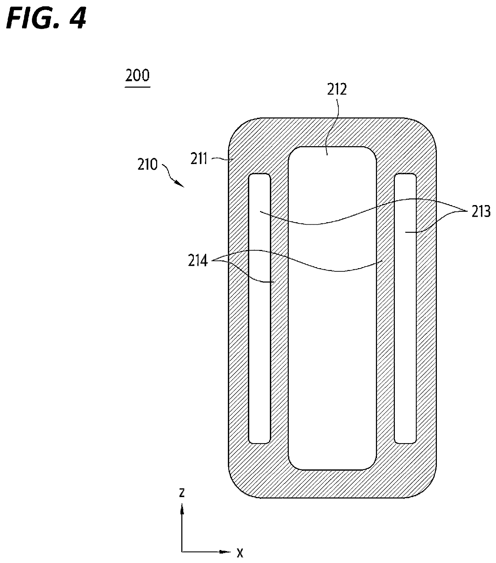

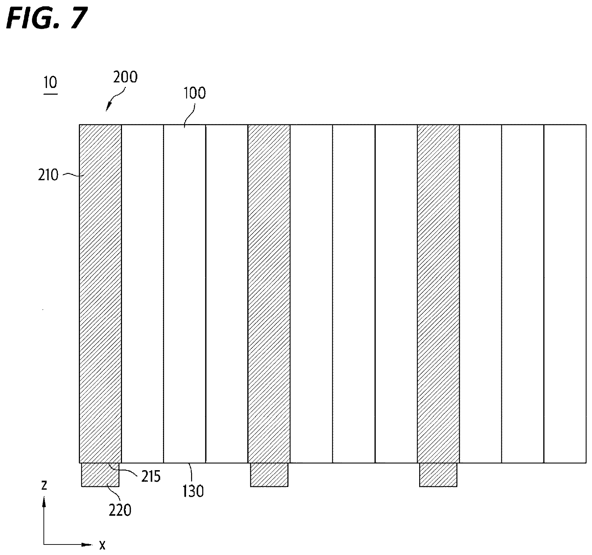

FIG. 2 is a perspective view illustrating at least a portion of multiple cooling members 200 according to an embodiment of the present application. FIG. 3 is a cross-sectional view (YZ plane) illustrating at least a portion of a cooling member 200 according to an embodiment of the present application. FIGS. 4 to 6 are cross-sectional views (XZ plane) taken along line A-A' of FIG. 2, respectively, in each of which at least a portion of a cooling member 200 according to an embodiment of the present application is illustrated. FIG. 7 is a cross-sectional view (XZ plane) illustrating at least a portion of the battery assembly 10 according to an embodiment of the present application.

In a battery assembly 10 according to an embodiment of the present application, the cooling member 200 may include a coolant flow path 212 configured to allow coolant to flow internally. The cooling member 200 may also include a gas pocket 213 provided on at least one side of the coolant flow path 212 and separated from the coolant flow path 212 by a partition 214.

For example, by including the coolant flow path 212 configured to allow coolant to flow and the gas pocket 213, the cooling member 200 may cool the battery cell 100 while preventing or suppressing issues caused by swelling.

The coolant flowing through the coolant flow path 212 may absorb heat generated by the battery cells 100, thereby preventing or suppressing the battery cells 100 from overheating.

In addition, when swelling occurs in a battery cell 100, the gas pocket 213 may press at least a portion of the battery cell 100 to prevent or suppress damage, thereby preventing or suppressing issues caused by swelling.

In a battery assembly 10 according to an embodiment of the present application, the cooling member 200 may include an elastic material.

For example, when the cooling member 200 includes an elastic material, it may be advantageous in preventing or suppressing issues caused by swelling by pressing at least a portion of the battery cell 100 so that the battery cell 100 is not damaged when swelling occurs therein.

In an embodiment, the elastic material is not particularly limited, but materials known to have suitable elasticity, such as silicone resin and urethane resin, may be used.

In this specification, the coolant refers to a substance that induces a cooling effect and is not particularly limited as long as it is a substance commonly used as a coolant in the art. For example, the coolant may include water, ammonia, Freon gas, or methyl chloride. The coolant flowing through the coolant flow path 212 may absorb heat generated by at least a portion of the multiple battery cells 100.

In a battery assembly 10 according to an embodiment of the present application, the cooling member 200 may include a main body 210 including a coolant flow path 212, an inlet 220 that communicates with the coolant flow path 212 and is configured to allow the coolant to flow in, and an outlet 230 that communicates with the coolant flow path 212 and is configured to allow the coolant to flow out. In an example, the inlet 220 may include an inlet path 221 that communicates with the coolant flow path 212, allowing the coolant to flow through the inlet path 221. In an example, the outlet 230 may include an outlet path 231 that communicates with the coolant flow path 212, allowing the coolant to flow through the outlet path 231.

In one example, the main body 210 may include gas pockets 213.

In a battery assembly 10 according to an embodiment of the present application, the cooling member 200 may be provided with a coolant flow path 212 therein.

For example, the coolant flow path 212 may not be sealed to allow for the supply or discharge of coolant from or to the outside of the cooling member 200. In other words, the coolant flow path 212 may be in communication with the exterior of the cooling member 200.

In a battery assembly 10 according to an embodiment of the present application, the coolant flow path 212 may be in communication with the inlet 220 (e.g., the inlet path 221 of the inlet 220).

For example, the coolant flow path 212 may also be in communication with the outlet 230 (e.g., the outlet path 231 of the outlet 230).

The coolant may be introduced into the interior of the cooling member 200 from the exterior via the inlet path 221.

For example, the coolant introduced through the inlet path 221 may flow along the coolant flow path 212 provided in the main body 210.

After passing through the coolant flow path 212, the coolant may be discharged to the exterior of the cooling member 200 via the outlet path 231. For example, the coolant may be introduced into or discharged from the cooling member 200 through a power-providing device, such as a pump.

In a battery assembly 10 according to an embodiment of the present application, the coolant flow path 212 may be designed appropriately.

For example, to effectively absorb heat generated by the battery cells 100, the coolant flow path 212 may be configured to form a path that reciprocates multiple times between one end and the other end of the cooling member 200, increasing the surface area of the coolant flow path 212. For example, as in the embodiment in FIGS. 4 to 6, the coolant flow path 212 may extend once from one side to the other side of the cooling member 200 to form a single space based on cross-section. However, the shape of the coolant flow path 212 is not particularly limited.

In an example, a coolant at a relatively low temperature may be supplied to the cooling member 200 through the inlet path 221. The coolant supplied through the inlet path 221 flows along the coolant flow path 212 in the main body 210, and the coolant flowing along the coolant flow path 212 may absorb heat generated by at least a portion of the battery cells 100. The coolant flowing along the coolant flow path 212 gradually increases in temperature, and the coolant discharged through the outlet path 231 may have a higher temperature than the coolant introduced through the inlet path 221. Thus, the temperature of the coolant flowing through the inlet path 221 may be equal to or lower than that of the coolant flowing through the outlet path 231, and preferably may be lower.

In a battery assembly 10 according to an embodiment of the present application, the cooling member 200 may be provided with a gas pocket 213 therein.

For example, the gas pocket 213 may be sealed so as not to communicate with the exterior of the cooling member 200. In other words, the gas pocket 213 may be a sealed space.

The gas pocket 213 may contain a gaseous substance at room temperature. This gaseous substance may include, for example, one or more selected from the group consisting of hydrogen (H₂), helium (He), nitrogen (N₂), and air, but is not limited thereto.

Meanwhile, the cooling member 200 may be, but not exclusively, manufactured through, for example, an injection molding process. For example, the gas pocket 213 may be formed by injecting a gaseous substance at room temperature into the sealed space provided during the manufacture of the cooling member 200 through an injection molding process, or by naturally allowing the gaseous substance to flow into the sealed space in an environment where the gaseous substance exists at room temperature.

In a battery assembly 10 according to an embodiment of the present application, the cooling member 200 may include a body portion 211 that determines its shape.

For example, in the cooling member 200, the coolant flow path 212 and the gas pocket 213 may be separated by a partition 214. The partition 214 may be a portion of the body portion 211 or may be connected to the body portion 211.

For example, the partition 214 and the body portion 211 may be connected to each other through connection means such as fasteners (e.g., bolts or nuts), adhesive, or welding.

In a battery assembly 10 according to an embodiment of the present application, the coolant passing through the coolant flow path 212 may not flow into the gas pocket 213 due to the partition 214. In addition, the gaseous substance contained within the gas pocket 213 may not flow into the coolant flow path 212 due to the partition 214. That is, the partition 214 may physically and spatially separate the coolant flow path 212 and the gas pocket 213.

In a battery assembly 10 according to an embodiment of the present application, when the cooling member 200 includes a coolant flow path 212 configured to allow coolant to flow therein or includes both a coolant flow path 212 and a gas pocket 213 separated from the coolant flow path 212 by the partition 214, for example, the positions and shapes of the coolant flow path 212 and the gas pocket 213 are not particularly limited.

FIGS. 4 to 6 are cross-sectional views specifically illustrating a portion of the main body 210 of the cooling member 200. In the cross-section of the main body 210, there may be one or multiple coolant flow paths 212. Additionally, in the cross-section of the main body 210, there may be one or multiple gas pockets 213.

Referring to FIG. 4, in the cross-section of the main body 210, there may be one coolant flow path 212 and multiple gas pockets 213. In the cooling member 200, the coolant flow path 212 may be formed in the central region (based on the x-axis) of the main body 210, and gas pockets 213 separated from the coolant flow path 212 by partitions 214 may be formed on opposite sides of the main body 210. The gas pockets 213 provided on opposite sides may effectively react to swelling of respective battery cells 100 provided adjacent thereto.

In an example, the gas injected into the gas pockets 213 may be air, but may be a gas with higher thermal conductivity than air, if necessary. For example, the gas provided within the gas pocket 213 may include at least one of hydrogen (H₂), helium (He), or nitrogen (N₂). The gas with high thermal conductivity may minimize the effect of interfering with heat exchange between the coolant within the coolant flow paths 212 and the battery cells 100.

In an example, the coolant may perform heat exchange with the battery cells 100 through the body portion 211 and through the gas within the body portion 211 and the gas pockets 213.

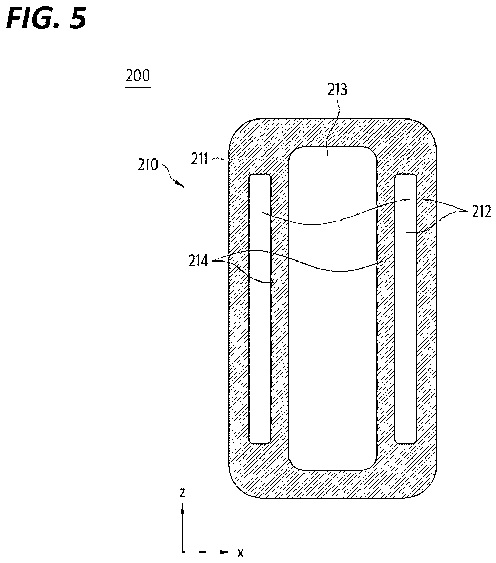

Referring to FIG. 5, in the cross-section of the main body 210, there may be multiple coolant flow paths 212 and one gas pocket 213. In the cooling member 200, the gas pocket 213 may be formed in the central region (based on the x-axis) of the main body 210, and the coolant flow paths 212 separated from the gas pocket 213 by partitions 214 may be formed on opposite sides of the main body 210. Since the gas pocket 213 is provided on the inner side of the cooling member 200 and the coolant flow paths 212 are provided on the outer side, the gas in the gas pocket 213 may minimize interference with heat transfer between the coolant and the battery cells 100, enabling efficient cooling. In addition, the gas pocket 213 disposed at the center of the cooling member 200 and the gas contained within the gas pocket 213 may attenuate heat transfer from a battery cell 100 on one side of the cooling member 200 to a battery cell 100 on the other side. To this end, the gas inside the gas pocket 213 may have a substance having low thermal conductivity, such as air.

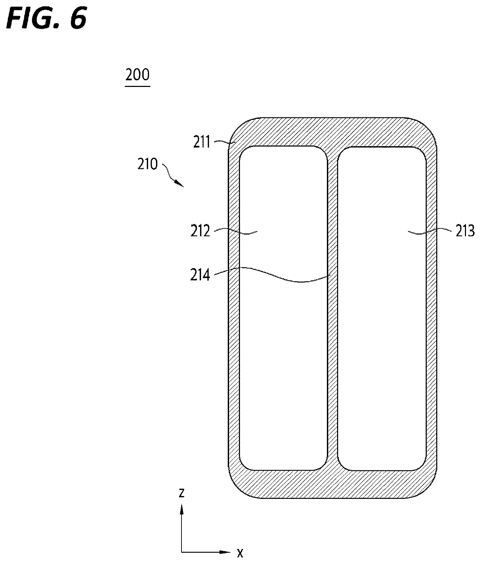

Referring to FIG. 6, in the cross-section of the main body 210, there may be one coolant flow path 212 and one gas pocket 213. In the cooling member 200, the coolant flow path 212 may be provided on one side *(e.g.,* the left side) of the main body 210, while the gas pocket 213 may be provided on the other side *(e.g.,* the right side), and the coolant flow path 212 and the gas pocket 213 may be separated by a partition 214.

In an example, the coolant in the coolant flow path 212 on one side may effectively transfer heat from the battery cell 100 adjacent to that side of the cooling member 200, while the gas pocket 213 on the other side may effectively react to swelling of a battery cell 100 disposed adjacent to the opposite side of the cooling member 200.

For instance, when cooling members 200 of this structure are disposed on opposite sides of a specific battery cell 100, respectively, one cooling member 200 may primarily react to the heat generation by the battery cell 100, while the other cooling member 200 may primarily react to swelling of the battery cell on the other side. In this case, since at least one of the opposite sides of the battery cell 100 may directly face the coolant flow path 212, a reduction in heat transfer efficiency due to the gas pocket 213 may be prevented or suppressed.

Although not separately illustrated, in the cross-section of the main body 210, there may be multiple coolant flow paths 212 and/or gas pockets 213. For example, the arrangement illustrated in FIG. 6 may be repeated horizontally or have vertically repeated patterns (e.g., FIG. 3). This arrangement of multiple components allows the partitions 214 to be more densely provided, reinforcing the rigidity of the cooling member 200 that is weakened due to the spaces formed by the coolant flow paths 212 and gas pockets 213.

In a battery assembly 10 according to an embodiment of the present application, the inlet 220 and the outlet 230 of the cooling member 200 may be spaced apart from each other. The inlet 220 and the outlet 230 may be separated by a predetermined distance to efficiently design the flow path for supplying or discharging coolant from or to the exterior of the cooling member 200. This predetermined distance between the inlet 220 and the outlet 230 is not specifically determined, but may be determined based on the design of the inlet 220 and the outlet 230.

In a battery assembly 10 according to an embodiment of the present application, the inlet 220 and the outlet 230 of the cooling member 200 may protrude from the main body 210. The surface of the main body 210 on which the inlet 220 is provided and the surface on which the outlet 230 is provided may be the same. In addition, the protruding directions of the inlet 220 and the outlet 230 may also be the same. Alternatively, the inlet 220 and the outlet 230 may be provided on two different surfaces of the main body 210, and the protrusion directions thereof may also be different.

In an example, by adopting the above-described structure, the cooling member 200 may efficiently utilize space, thereby enabling more effective cooling of the battery cells 100. In addition, through the cooling member 200, the battery cells 100 may be cooled while preventing or suppressing problems caused by swelling.

In a battery assembly 10 according to an embodiment of the present application, the inlet 220 and the outlet 230 of the cooling member 200 may extend from one surface of the main body 210 corresponding to the venting direction of multiple battery cells 100. In an example, the inlet 220 and the outlet 230 may extend from a protruding surface 215, which is one surface of the main body 210. The protruding surface 215 may refer to the surface of the main body 210 on which the inlet 220 and outlet 230 are provided.

In an example, the inlet 220 and the outlet 230 of the cooling member 200 may extend in the same direction from the one surface of the main body 210. In an example, the inlet 220 and the outlet 230 may extend in the same direction from the protruding surface 215. Referring to FIG. 7, the inlet 220 may extend in the -z-axis direction, and the outlet 230 may also extend in the -z-axis direction.

In an example, the inlet 220 and the outlet 230 of the cooling member 200 may protrude beyond one surfaces of the multiple battery cells 100 that are positioned in parallel to one surface of the main body 210. In another example, the inlet 220 and outlet 230 may protrude beyond the first surface 130 which corresponds to the one surfaces of the multiple battery cells 100, which are positioned in parallel to the protruding surface 215. When the inlet 220 and the outlet 230 protruding beyond both the one surface of the main body 210 and the one surfaces of the multiple battery cells 100, space may be utilized more efficiently, and thus the cooling of the battery cells 100 may be performed more effectively. Specific details regarding this will be described later.

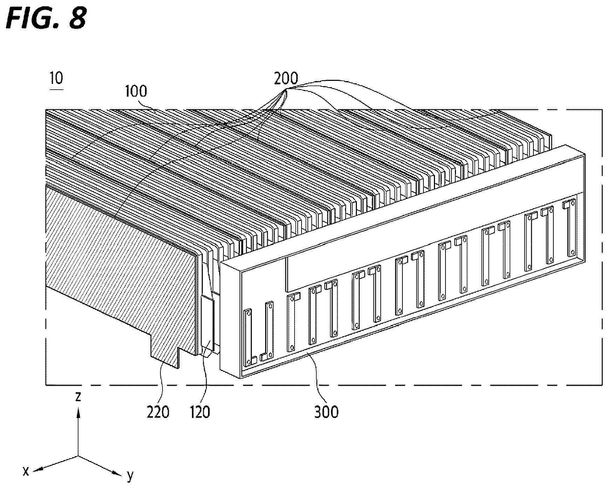

FIG. 8 is an exploded perspective view illustrating at least a portion of a battery assembly 10 according to an embodiment of the present application. In one example, the battery assembly 10 may include a busbar assembly 300. The busbar assembly 300 may include busbars electrically connected to the cell tabs 120 of the battery cells 100 and a busbar support that supports the busbars. The cell tabs 120 may be welded to the busbars, and through welding, the cell tabs 120 and the busbars may be electrically connected. The busbars may include insertion holes into which the cell tabs 120 can be inserted. In FIG. 8, the busbar assembly 300 is illustrated in a state in which the busbar assembly 300 is connected to only one cell tab 120. However, the sizes and numbers of busbar assemblies 300 may be determined based on the number and protruding directions of cell tabs 120 of the battery cells 100.

In a battery assembly 10 according to an embodiment of the present application, at least a portion of the multiple battery cells 100 may be stacked in parallel in one direction. For example, by stacking at least a portion of the multiple battery cells 100 in parallel in one direction, the cell tabs 120 of respective battery cell 100 may protrude in the same direction and may be arranged in parallel. Through this arrangement, spatial efficiency may be improved, and the busbar assembly 300 can also be easily designed.

The battery assembly 10 according to an embodiment of the present application may include multiple battery cells 100 and a cooling member 200 interposed between the multiple battery cells 100. In addition, the cooling member 200 may include an inlet 220 and an outlet 230 (not illustrated) protruding from the main body 210.

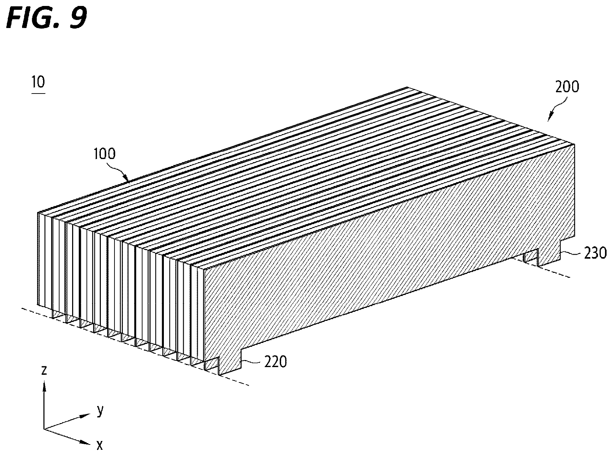

FIG. 9 is a perspective view illustrating at least a portion of a battery assembly 10 according to an embodiment of the present application. In an example, the battery assembly 10 may include multiple cooling members 200. Respective inlets 220 of multiple cooling members 200) may be arranged in a row such that at least a portion of the inlets face each other. Respective outlets 230 of the multiple cooling members 200 may also be arranged in a row such that at least a portion of the outlets face each other.

In the battery assembly 10 according to an embodiment of the present application, at least a portion of the multiple battery cells 100 may be stacked in parallel in one direction. In the battery assembly 10, the multiple cooling members 200 may be interposed between the multiple battery cells 100, and at least a portion of the battery cells 100 may be stacked along one direction.

For example, respective inlets 220 of the multiple cooling members 200 may be arranged in a row such that at least a portion of the inlets face each other, and respective outlets 230 of the multiple cooling members 200 may also be arranged in a row such that at least a portion of the outlets face each other. This arrangement enables a space-efficient design for coolant flow paths for supplying or discharging coolant from or to the exterior of the cooling members 200.

Meanwhile, each battery cell 100 may include two stacking surfaces 111 and a side surface part connecting the boundaries of the two stacking surfaces 111, and the side surface part may be configured as a combination of at least one long side surface and at least one short side surface.

In an example, among the multiple rectangular surfaces forming the side surface part of the battery cell 100, that is, the surfaces having a shape in which the relative length in a specific direction is significantly greater than in other directions, the term "long side surface" may refer to a surface with a longitudinal length greater than the average longitudinal length of the multiple surfaces in the side surface part of the battery cell 100, and the term "short side surface" may refer to a surface with a longitudinal length that is smaller than or equal to the average longitudinal direction.

In an example, based on the battery assembly 10, the protruding surface 215 provided with the inlet 220 and the outlet 230 in the cooling member 200 may correspond to a long side surface of the battery cell 100. Here, the term "correspond" may mean that the primary direction in which the protruding surface 215 is oriented in the assembly 10 is substantially the same as the primary direction in which the long side surface of the battery cell 100 is oriented.

When the direction in which the long side surface of the battery cell 100 corresponding to the protruding surface 215 is oriented is the venting direction (at least the intended direction) of the battery cell 100, then the inlet 220 and the outlet 230 of the cooling member 200 are positioned in the space provided for venting in the battery assembly 10, thereby achieving the effect of eliminating the need to secure a separate space for providing the inlet 220 or the outlet 230. In addition, the density of coolant in the region around the inlet 220 and the outlet 230 is higher than in other regions, which may also contribute to suppressing thermal propagation phenomenon due to cooling when an event occurs.

Referring to FIGS. 7 and 9, the battery assembly 10 having a hexahedral shape may be configured such that the long side surfaces of the battery cells 100 are positioned at the top and bottom sides, while the short side surfaces of the battery cells 100 are disposed at the side surfaces. For example, the protruding surfaces 215 may correspond to the long side surfaces positioned at the bottom side of the battery cells 100.

In an example, the battery cells 100 may have a bottom venting structure. The protruding surfaces 215 provided with the inlets 220 and the outlets 230 may correspond to the venting direction of the battery cells 100. The protruding surfaces 215 may face the bottom side of the assembly 10 to correspond to the venting direction.

By way of example, the venting direction of the battery cells 100 may refer to the intended direction in which venting gas generated from the battery cells 100 is discharged from a battery pack 1.

For example, the venting direction of the battery cells 100 may correspond to the direction in which a venting space 10S formed in the battery pack 1 is oriented.

For example, the venting direction of the battery cells 100 may correspond to the direction in which venting holes (e.g., the third holes 10A-3) are formed in the housing 10A of the battery assembly 10 that covers the multiple battery cells 100. In an example, the venting direction of the multiple battery cells may correspond to the direction in which venting holes (e.g., the third holes 10A-3) are formed to discharge venting gas generated from at least one of the multiple battery cells 100.

Meanwhile, in an embodiment, the venting direction of the battery cells 100 in the battery pack 1 may correspond to the bottom of the battery pack 1. However, this does not necessarily mean that the venting of the battery pack 1 (and the battery cells 100) according to various embodiments of the present disclosure is directed downwards of the battery pack 1, and in some cases, the venting may be directed upwards or sideways of the battery pack 1.

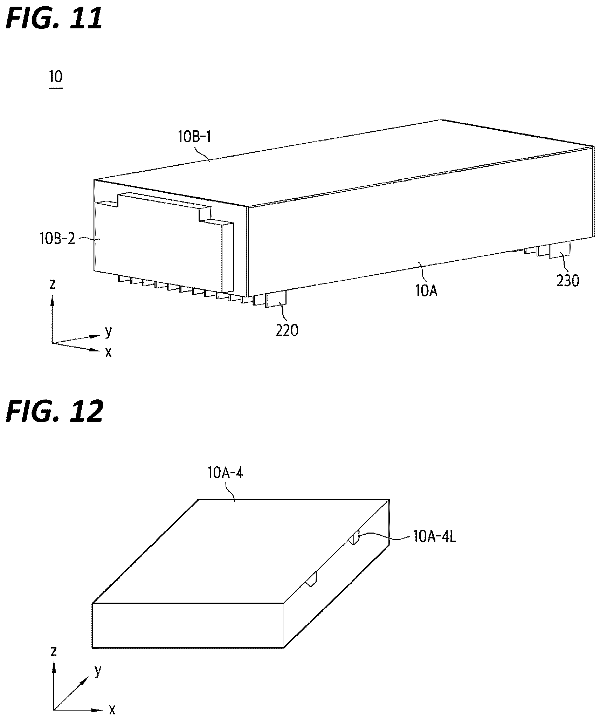

FIG. 10 is a perspective view illustrating at least a portion of a battery assembly 10 according to an embodiment of the present application. FIG. 11 is a perspective view illustrating at least a portion of the battery assembly 10 according to an embodiment of the present application.

The battery assembly 10 according to an embodiment of the present application may include a housing 10A that accommodates multiple battery cells 100 and cooling members 200. For example, the battery assembly 10 may include a cover member 10B that covers at least a portion of the housing 10A.

For example, the housing 10A may have a structure in which at least one side is open to accommodate multiple battery cells 100 and cooling members 200.

Referring to FIG. 10, the remaining sides of the housing 10A, excluding the open side, may define an accommodation space for the multiple battery cells 100 and cooling members 200.

The battery assembly 10 according to an embodiment of the present application may include a cover member 10B that covers at least a portion of the housing 10A, as described above. The term "cover" in reference to the cover member 10B covering the housing 10A may mean that at least a portion of the open side of the housing 10A is shielded.

Referring to FIGS. 10 and 11, in the battery assembly 10 according to an embodiment of the present application, the housing 10A may be open at two side surfaces parallel to the XZ plane and a top side parallel to the XY plane. In addition, the battery assembly 10 may include an upper cover member 10B-1 that covers the open top side of the housing 10A and side cover members 10B-2 that cover the open sides of the housing 10A.

In an example, the open side surfaces of the housing 10A may be arranged to correspond to the direction in which the cell tabs 120 of the battery cells 100 protrude. In addition, although not illustrated in the drawings, the cell tabs 120 of the battery cells 100 may be accommodated in the housing 10A in the state of being coupled to a busbar assembly 300. A side cover member 10B-2 may cover the region where the busbar assembly 300 is disposed.

In the battery assembly 10 according to an embodiment of the present application, the housing 10A and the cover member 10B may be coupled to each other. Through this coupling, the cover member 10B may be anchored to the housing 10A. This coupling may be achieved by coupling means such as fasteners (e.g., bolts or nuts), adhesives, or welding.

In the battery assembly 10 according to an embodiment of the present application, the housing 10A may include first holes 10A-1 formed on one surface to allow the inlets 220 of the cooling member 200 to at least partially penetrate therethrough, and second holes 10A-2 formed on one surface to allow the outlets 230 of the cooling member 200 to at least partially penetrate therethrough. In an example, by making the inlets 220 at least partially penetrate the housing 10A through the first holes 10A-1, and the outlets 230 at least partially penetrate the housing 10A through the second holes 10A-2, the inlets 220 and the outlets 230 may have a shape that protrudes from the housing 10A. This configuration may enable efficient use of space and enhance the cooling effectiveness of the battery cells 100. In an example, the first holes 10A-1 and the second holes 10A-2 may be provided at the bottom of the housing 10A.

In another example, the first holes 10A-1 provided on one surface of the housing 10A may be formed considering the number, size, positions, and shape of inlets 220. The first holes 10A-1 may be appropriately provided to correspond to the positions where the inlets 220 are to penetrate the housing 10A.

In an example, the second holes 10A-2 provided on one surface of the housing 10A may be formed considering the number, size, positions, and shape of outlets 230. The second holes 10A-2 may be appropriately provided to correspond to the positions where the outlets 230 are to penetrate the housing 10A.

In an example, considering the structure of the aforementioned cooling members 200, the first holes 10A-1 and the second holes 10A-2 may be provided on the same surface of the housing 10A.

In another example, the housing 10A may include third holes 10A-3, different from the first holes 10A-1 and the second holes 10A-2. The third holes 10A-3 may be provided on the same one surface of the housing 10A where the first holes 10A-1 and the second holes 10A-2 are provided.

In an example, the housing 10A may be in contact with at least a portion of the multiple battery cells 100 and at least a portion of the cooling members 200. Specifically, the inlets 220 and the outlets 230 of the cooling members 200 may pass through the first holes 10A-1 and the second holes 10A-2, respectively, until at least a portion of the multiple battery cells 100 and at least a portion of the cooling members 200 come into contact with the one surface of the housing 10A. Here, the housing 10A may include the third holes 10A-3 on at least one surface that is in contact with at least a portion of the multiple battery cells 100 or at least a portion of the cooling members 200. In an example, the third holes 10A-3 may be provided between the first and second holes 10A-1 and 10A-2 and may be spaced apart from the first and second holes 10A-1 and 10A-2.

In another example, as described above, the protruding surfaces 215 may correspond to the venting direction of the battery cells 100, and accordingly, the direction in which the first holes 10A-1 and the second holes 10A-2 penetrate the housing 10A may correspond to the venting direction.

In an example, the direction in which the third holes 10A-3 penetrate the housing 10A may correspond to the venting direction. Through this configuration, the battery assembly 10 may more effectively dissipate heat generated by the battery cells 100 via the third holes 10A-3 and more easily release generated gases or dispersed substances to the exterior. The sizes and number of third holes 10A-3 are not limited as long as the housing 10A has sufficient durability to protect the multiple battery cells 100 and the cooling members 200 from external shocks and vibrations.

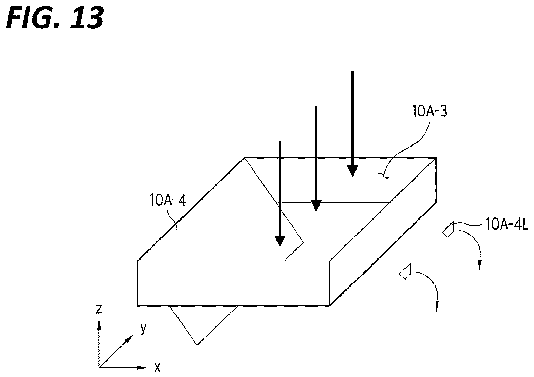

FIGS. 12 and 13 are enlarged views of portion P of FIG. 10.

In an example, the housing 10A may include a cover 10A-4 that covers at least a portion of a third hole 10A-3.

For example, there may be multiple third holes 10A-3, and at least a portion of these may be covered by a cover 10A-4.

A cover 10A-4 may be attached to one side of the boundary of a third hole 10A-3 and may open or close the third hole 10A-3.

For example, the cover 10A-4 may function as a flap. The cover 10A-4 may close at least a portion of the third hole 10A-3 and may open when the internal pressure of the battery assembly 10 exceeds a predetermined level during closure.

In an embodiment, the housing 10A may include a latch 10A-4L attached to one side of the boundary of the third hole 10A-3 to allow the cover 10A-4 to close at least a portion of the third hole 10A-3. For example, the latch 10A-4L may support the bottom side of the cover 10A-4 to close at least a portion of the third hole 10A-3. For example, the internal pressure of the battery assembly 10 exceeds a predetermined level, the latch 10A-4L may detach from the housing 10A, causing the unsupported portion of the cover 10A-4 to fall into and open the third hole 10A-3.

When the internal pressure of the battery assembly 10 exceeds a predetermined value, this may be a situation in which high heat and gases are released from a battery cell 100 due to, for example, abnormal operation of the battery cell 100.

In an example, the cover 10A-4 may include a metal material. For example, the cover 10A-4 may include a metal material with excellent thermal conductivity. The metal material may, but not exclusively, include one or more selected from the group consisting of gold (Au), silver (Ag), copper (Cu), aluminum (Al), tungsten (W), iron (Fe), zinc (Zn), nickel (Ni), platinum (Pt), and magnesium (Mg).

When the cover 10A-4 includes a metal material, heat generated from a battery cell 100, may be dissipated more effectively even when at least a portion of the third hole 10A-3 is closed. In an example, the cover 10A-4 may include a fire-resistant material.

For example, the fire-resistant material may, but not exclusively, include mica. In an example, the cover 10A-4 may include an insulating material. For example, the insulating material may, but not exclusively, include resin.

In an example, as previously described, when the internal pressure of the battery assembly 10 exceeds a predetermined value, since the cover 10A-4 opens the third hole 10A-3, the heat generated from the battery cell 100 may be more effectively dissipated and generated gases or dispersed substances may be easily released to the exterior.

FIG. 14 is an exploded perspective view illustrating at least a portion of a battery pack 1 according to an embodiment of the present application. The battery pack 1 according to an embodiment of the present application may include the aforementioned battery assembly 10. Hereinafter, descriptions regarding the battery assembly 10 may refer to the descriptions above.

The battery pack 1 according to an embodiment of the present application may include a pack housing 1A that provides an accommodation space that accommodates battery assemblies 10. The pack housing 1A of the battery pack 1 may include a pack outer wall frame 1A-1 that surrounds at least a portion of the battery assemblies 10 provided in the accommodation space.

For example, the pack housing 1A may include pack side walls 1A-2 extending in a first direction (e.g., along the y-axis direction) and a cross member 1A-3 extending in a second direction (e.g., along the x-axis direction) to partition the space according to the size of the battery assemblies 10 within the accommodation space.

For example, the pack housing 1A may include electrical equipment spaces 1A-4 in which electrical equipment may be provided, in addition to the spaces partitioned according to the size of the battery assemblies 10 by the pack side walls 1A-2 and the cross members 1A-3.

In an example, the battery pack 1 may include electrical equipment, such as a battery management system (BMS), in the electrical equipment spaces 1A-4. The electrical equipment may be electrically connected to the battery assemblies 10 included in the battery pack 1 and may perform data transmission and reception necessary for managing the battery assemblies 10, as well as computations based on the data.

The battery pack 1 according to an embodiment of the present application may include a coolant pipe 1C for introducing and discharging coolant into and from the battery assemblies 10. For example, the battery pack 1 may include a coolant inlet pipe 1C-1 for supplying coolant to the battery assemblies 10 and a coolant outlet pipe 1C-2 for discharging coolant from the battery assemblies 10.

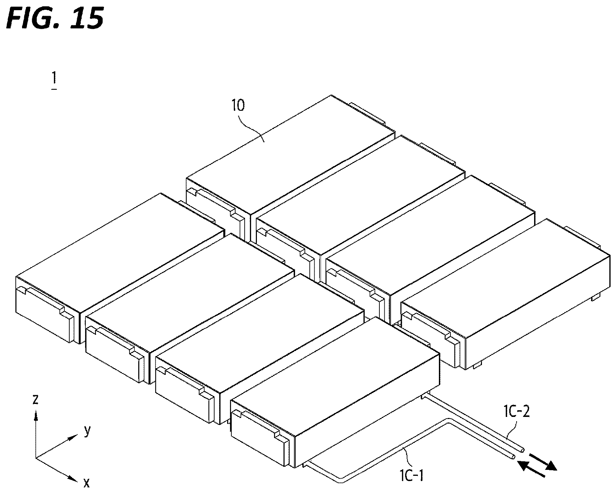

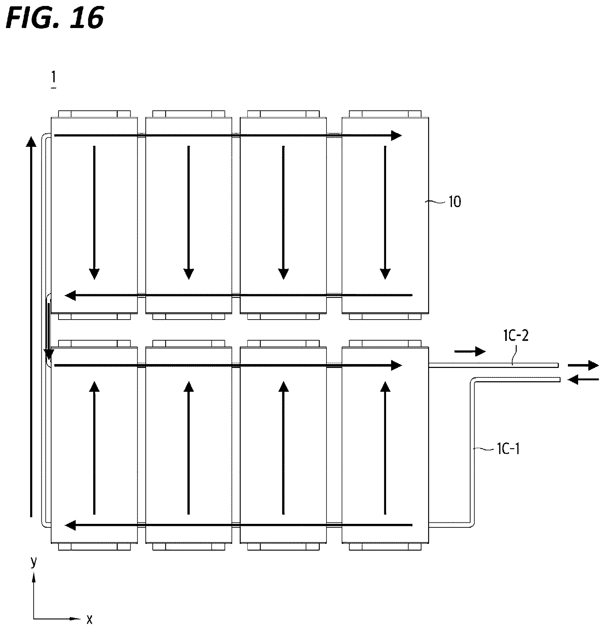

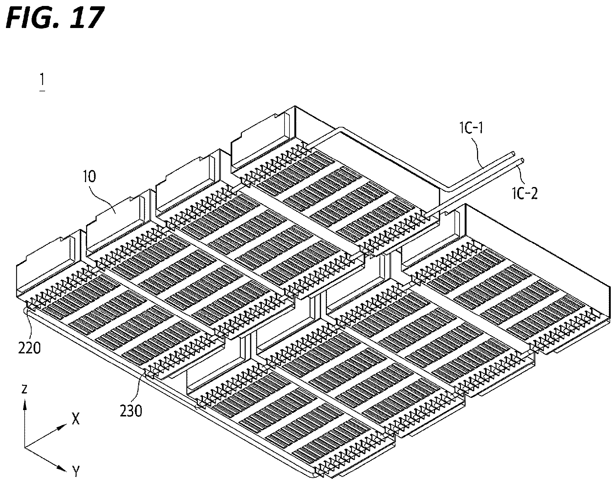

FIG. 15 is a perspective view illustrating at least a portion of a battery pack 1 according to an embodiment of the present application, in which coolant pipes 1C-1 and 1C-2 are illustrated. FIG. 16 is a cross-sectional view (XY plane) illustrating at least a portion of the battery pack 1 according to an embodiment of the present application, in which the coolant pipes 1C-1 and 1C-2 are illustrated. FIG. 17 is a perspective view illustrating at least a portion of the battery pack 1 according to an embodiment of the present application, in which the bottom side of the battery pack is illustrated.

The battery pack 1 according to an embodiment of the present application may include one or more battery assemblies 10. The number of battery assemblies 10 included in the battery pack 1 may be predetermined, and the design of the pack housing 1A may vary depending on the number of battery assemblies. Alternatively, the design of the battery assemblies 10 may vary depending on, for example, the size of the pack housing 1A and the number of battery assemblies 10 to be included.

In the battery pack 1 according to an embodiment of the present application, the coolant flow paths 212 provided in the cooling members 200 of the battery assemblies 10 may be in communication with the coolant pipe 1C. Specifically, the coolant flow paths 212 may be in communication with the coolant inlet pipe 1C-1 and the coolant outlet pipe 1C-2.

In the battery pack 1 according to an embodiment of the present application, coolant may be introduced into the coolant flow paths 212 of the cooling members 200 through the coolant inlet pipe 1C-1. In addition, the coolant that has passed through the coolant flow paths 212 of the cooling members 200 may be discharged to the exterior of the battery pack 1 via the coolant outlet pipe 1C-2 in communication with the coolant flow paths 212. The flow path design of the coolant inlet pipe 1C-1 and the coolant outlet pipe 1C-2 is not particularly limited.

In the battery pack 1 according to an embodiment of the present application, coolant moving paths may be identified. As described above, the coolant inlet pipe 1C-1 is in communication with the coolant flow paths 212, and the coolant outlet pipe 1C-2 is also in communication with the coolant flow paths 212. Therefore, the coolant introduced into the coolant inlet pipe 1C-1 may be discharged to the coolant outlet pipe 1C-2 via the coolant flow paths 212.

The battery pack 1 according to an embodiment of the present application may include multiple battery assemblies 10. In addition, the coolant flow path 212 of one of the multiple battery assemblies 10 may be in communication with the coolant flow path 212 of another battery assembly 10 via at least one of the coolant inlet pipe 1C-1 and the coolant outlet pipe 1C-2. In this case, the one coolant flow path 212 may be the coolant flow path of at least one of the multiple cooling members 200, and the another coolant flow path 212 may also be the coolant flow path 212 of at least one of the multiple cooling members 200.

In the battery pack 1 according to an embodiment of the present application, the coolant inlet pipe 1C-1 may be in communication with the inlet path 221 provided at the inlet 220 of a cooling members 200. In addition, in the battery pack 1, the coolant outlet pipe 1C-2 may be in communication with the outlet path 231 provided at the outlet 230 of a cooling member 200.

When a battery assembly 10 provided in the battery pack 1 according to an embodiment of the present application includes multiple cooling members 200, at least a portion of the cooling members 200 may each be in communication with the coolant inlet pipe 1C-1 at the inlet path 221 provided at the inlet 220. Preferably, all of the multiple cooling members 200 may each be in communication with the coolant inlet pipe 1C-1 at the inlet path 221 provided at the inlet 220.

When a battery assembly 10 provided in the battery pack 1 according to an embodiment of the present application includes multiple cooling members 200, at least a portion of the cooling members 200 may each be in communication with the coolant outlet pipe 1C-2 at the outlet path 231 provided at the outlet 230. Preferably, all of the multiple cooling members 200 may each be in communication with the coolant outlet pipe 1C-2 at the outlet path 231 provided at the outlet 230.

In an example, the inlet 220 and the outlet 230 of a cooling member 200 may protrude from a protruding surface 215 corresponding to a long side surface of a battery assembly 10. Referring to FIG. 17, since the inlets 220 and outlets 230 protrude toward the bottom of the battery pack 1, the coolant pipes 1C passing through the inlets 220 and the outlets 230 may also be arranged at the bottom of the battery assembly 10, that is, at the bottom of the battery pack 1.

In an embodiment, the coolant pipes 1C provided inside the battery pack 1 may be entirely arranged within the bottom space of the battery pack 1, thereby achieving a structure that does not interfere with the side components within the battery pack 1.

For example, when a structure in which the busbar assemblies 300 are arranged laterally within the battery pack 1 is configured, the arrangement of the coolant pipes 1C at the bottom fundamentally prevents or suppress interference with the busbar assemblies 300, ultimately providing greater design flexibility. Accordingly, the arrangement of the coolant pipes 1C at the bottom may be usefully applied to a pouch cell-type battery pack 1 with electrode tabs arranged laterally.

In addition, the arrangement of the coolant pipes 1C at the bottom may make it possible to avoid unnecessary expansion of the space in the lateral direction of the battery pack 1. Since the bottom space of the battery assembly 10 is inherently provided for venting, the arrangement of the coolant pipes 1C at the bottom allows for use of a portion of the venting space, thereby minimizing the increase in volume due to the coolant pipes 1C in view of the entire battery pack 1.

In an example, the coolant pipes 1C may be configured to sequentially pass through multiple inlets 220 constituting the battery pack 1 and then sequentially pass through multiple outlets 230 constituting the battery pack 1. To simplify the structure of the coolant pipes 1C, at least a portion of the multiple inlets 220 may be aligned on the same line, and at least a portion of the multiple outlets 230 may also be aligned on another line. This may minimize the bending structures of the coolant pipes 1C while allowing the coolant to be smoothly supplied to and recovered from each cooling member 200.

In an example, the coolant inlet pipe 1C-1 and the coolant outlet pipe 1C-2 may be arranged together on one side surface of the battery pack 1, thereby achieving structural efficiency, such as facilitating pipe installation, maintenance, and repair.

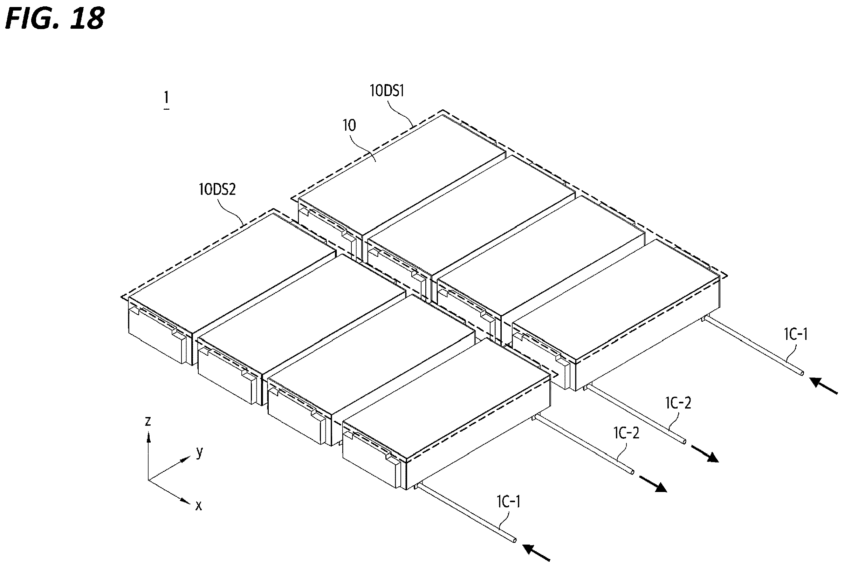

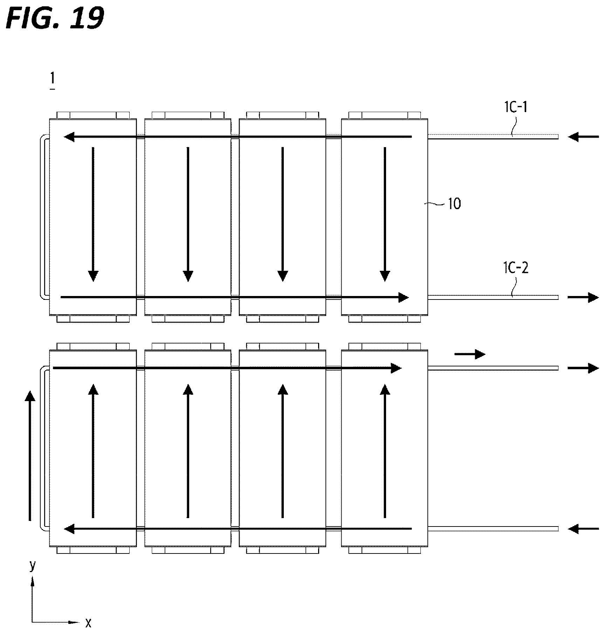

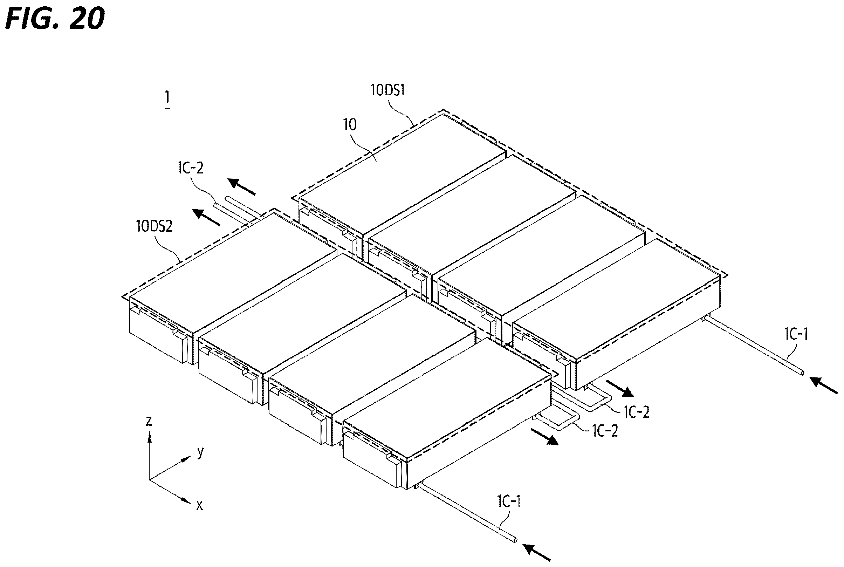

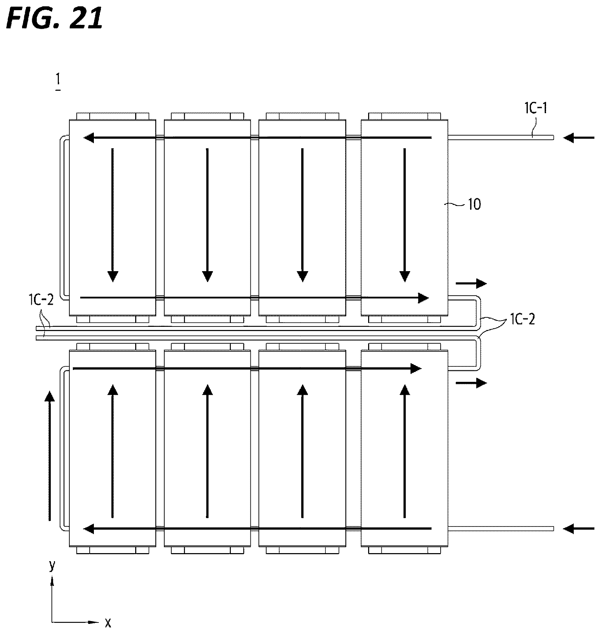

FIG. 18 is a perspective view illustrating at least a portion of a battery pack 1 according to an embodiment of the present application, in which coolant pipes 1C-1 and 1C-2 are illustrated. FIG. 19 is a cross-sectional view (XY plane) illustrating at least a portion of the battery pack 1 according to an embodiment of the present application, in which the coolant pipes 1C-1 and 1C-2 are illustrated. FIG. 20 is a perspective view illustrating at least a portion of a battery pack 1 according to an embodiment of the present application, in which coolant pipes 1C-1 and 1C-2 are illustrated. FIG. 21 is a cross-sectional view (XY plane) illustrating at least a portion of the battery pack 1 according to an embodiment of the present application, in which the coolant pipes 1C-1 and 1C-2 are illustrated.

In an example, there may be multiple coolant inlet pipes 1C-1 and coolant outlet pipes 1C-2.

In an embodiment, the battery pack 1 may include a first region 10DS1 including one or more battery assemblies 10 and a second region 10DS2, which is a separate region and including one or more battery assemblies 10.

For example, the number of battery assemblies 10 included in each of the first region 10DS1 and the second region 10DS2 may be multiple, and the multiple battery assemblies 10 may be arranged in parallel while being spaced apart from each other in one direction (e.g., in the x-axis direction).

For example, the first region 10DS1 and the second region 10DS2 may be spaced apart from each other, for example, in a direction (e.g., the y-axis direction) that intersect the direction in which the battery assemblies 10 are arranged in parallel *(e.g.,* in the x-axis direction). A cross member 1A-3 may be disposed in the space therebetween.

Referring to FIGS. 18 and 19, in an example, each of the first region 10DS1 and the second region 10DS2 may include different coolant pipes 1C-1 and 1C-2. In the first region 10DS1, the cooling members 200 may communicate with a coolant inlet pipe 1C-1 and a coolant outlet pipe 1C-2. In the second region 10DS2, the cooling members 200 may also communicate with a coolant inlet pipe 1C-1 and a coolant outlet pipe 1C-2. Here, the inflow direction of the coolant flowing in through the coolant inlet pipe 1C-1 of the first region 10DS1 and the outflow direction of the coolant flowing out through the coolant outlet pipe 1C-2 may correspond. The inflow direction of the coolant flowing in through the coolant inlet pipe 1C-1 of the second region 10DS2 and the outflow direction of the coolant flowing out through the coolant outlet pipe 1C-2 may also correspond.

Referring to FIGS. 20 and 21, in an example, each of the first region 10DS1 and the second region 10DS2 may include different coolant pipes 1C-1 and 1C-2. In the first region 10DS1, the cooling members 200 may communicate with a coolant inlet pipe 1C-1 and a coolant outlet pipe 1C-2. In the second region 10DS2, the cooling members 200 may also communicate with a coolant inlet pipe 1C-1 and a coolant outlet pipe 1C-2. Here, the inflow direction of the coolant flowing in through the coolant inlet pipe 1C-1 of the first region 10DS1 and the outflow direction of the coolant flowing out through the coolant outlet pipe 1C-2 may be opposite. The inflow direction of the coolant flowing in through the coolant inlet pipe 1C-1 of the second region 10DS2 and the outflow direction of the coolant flowing out through the coolant outlet pipe 1C-2 may also be opposite.

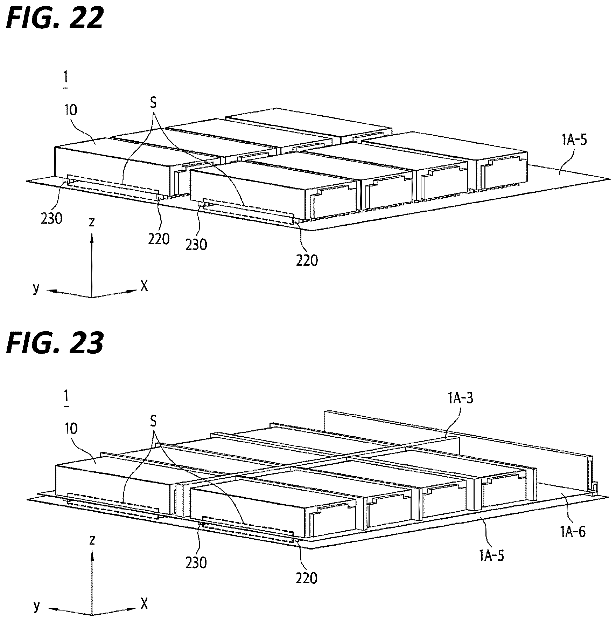

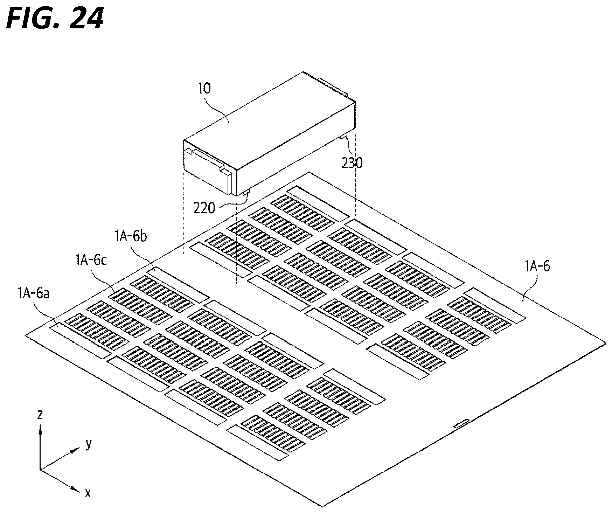

FIG. 22 is a perspective view illustrating at least a portion of a battery pack 1 according to an example of the present application. FIG. 23 is a perspective view illustrating at least a portion of the battery pack 1 according to an embodiment of the present application, illustrating that a cross member 1A-3 is provided. FIG. 24 is an exploded perspective view illustrating at least a portion of the battery pack 1 according to an embodiment of the present application, in which a seating surface 1A-6 of the battery pack 1 is illustrated.

In a battery pack 1 according to an embodiment of the present application, a pack housing 1A may include a pack support frame 1A-5 that supports the battery assemblies 10 accommodated in the accommodation space.

For example, the inlets 220 and outlets 230 protruding from the battery assemblies 10 may be in contact with the pack support frame 1A-5.

The pack support frame 1A-5 may support the battery assemblies 10 via the inlets 220 and the outlet 230 that are in contact therewith.

In one example, the pack support frame 1A-5 may be of a planar shape. In addition, a separation space S may be formed between the battery assemblies 10 and the pack support frame 1A-5. That is, due to the protruding inlets 220 and outlets 230, the separation space S may be formed. That is, the inlets 220 and outlets 230 may be provided in the separation space S within the battery pack 1. The heat generated from the battery cells 100 may be dissipated more effectively through the separation space S, and generated gases or dispersed substances may also be easily released to the exterior.

In an example, the venting direction of the battery cells 100 or battery assemblies 10 may correspond to the protruding direction of the inlets 220 or outlets 230, thereby allowing the space S to be utilized for multiple purposes.

The battery pack 1 according to an embodiment of the present application may include a seating surface 1A-6. The seating surface 1A-6 may be connected to the outer wall frame 1A-1.

For example, a portion of the seating surface 1A-6 may be connected to the outer wall frame 1A-1.

For example, the seating surface 1A-6 and the outer wall frame 1A-1 may be connected through connecting means such as fastening elements (e.g., bolts or nuts), an adhesive, or welding.

For example, when the seating surface 1A-6 is connected to the outer wall frame 1A-1, a battery pack 1 with higher durability may be ensured.

In the battery pack 1 according to an embodiment of the present application, the seating surface 1A-6 may be provided with first seating surface holes 1A-6a to allow the inlets 220 provided on the cooling members 200 of the battery assemblies 10 to at least partially penetrate therethrough, and second seating surface holes 1A-6b to allow the outlets 230 provided on the cooling members 200 to at least partially penetrate therethrough.

In the battery pack 1 according to an embodiment of the present application, the seating surface 1A-6 may be spaced apart from the pack support frame 1A-5 by a predetermined distance. The pack support frame 1A-5 may support the inlets 220 and the outlets 230 of the battery assemblies 10, while the seating surface 1A-6 may support regions of the battery assemblies 10 excluding the inlets 220 and the outlets 230. For example, the seating surface 1A-6 may be provided between the pack support frame 1A-5 and the battery assemblies 10, and the separation space S may be defined as the space between the seating surface 1A-6 and the pack support frame 1A-5.

In an example, the first seating surface holes 1A-6a provided in the seating surface 1A-6 may be formed considering, for example, the number, size, positions, and shape of inlets 220.

For example, the first seating surface holes 1A-6a may be appropriately provided to correspond with the positions where the inlets 220 are to penetrate the seating surface 1A-6.

In another example, the first seating surface holes 1A-6a may be provided as a single hole to allow all inlets 220 to penetrate therethrough.

In an example, the second seating surface holes 1A-6b provided in the seating surface 1A-6 may be formed considering, for example, the number, size, positions, and shape of outlets 230. For example, the second seating surface holes 1A-6b may be appropriately provided to correspond with the positions where the outlets 230 are to penetrate the seating surface 1A-6.

Considering the structure of the aforementioned cooling members 200, the first seating surface holes 1A-6a and the second seating surface holes 1A-6b may be provided on the same surface of the seating surface 1A-6.

In an example, the seating surface 1A-6 may also include third seating surface holes 1A-6c, which are different from the first seating surface holes 1A-6a and the second seating surface holes 1A-6b. The third seating surface holes 1A-6c may be provided on the same surface of the seating surface 1A-6 where the first seating surface holes 1A-6a and the second seating surface holes 1A-6b are provided.

In an example, as previously described, the seating surface 1A-6 may be brought into contact with the remaining portions of the battery assemblies 10 except for at least a portion of the inlet portions 220 and at least a portion of the outlet portions 230. As described above, the housings 10A of the battery assemblies 10 may include third holes 10A-3, and the seating surface 1A-6 may include third seating surface holes 1A-6c at positions corresponding to the third holes 10A-3. Through the third seating surface holes 1A-6c provided at positions corresponding to the third holes 10A-3, heat generated from the battery cells 100 may be more effectively dissipated.

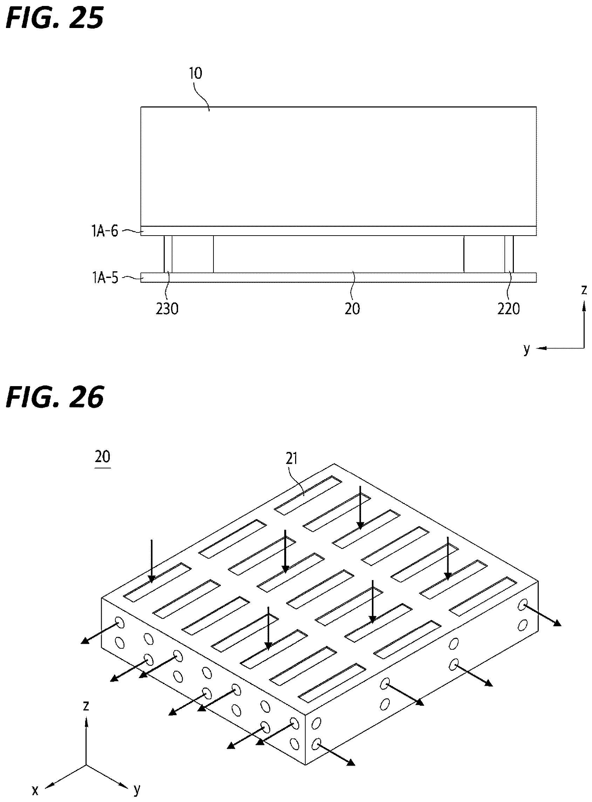

FIG. 25 is a cross-sectional view (YZ plane) illustrating at least a portion of a battery pack 1 according to an embodiment of the present application, illustrating that an auxiliary member 20 is provided. FIG. 26 is a perspective view illustrating the auxiliary member 20 in the battery pack 1 according to an embodiment of the present application.

The battery pack 1 according to an embodiment of the present application may include an auxiliary member 20 provided between a battery assembly 10 and a pack support frame 1A-5. The auxiliary member 20 may support the bottom surface of the battery assembly 10 or the bottom surface of the seating surface 1A-6, and may be provided on the top surface of the pack support frame 1A-5. Through this, the battery assembly 10 may be stably supported. In an example, the auxiliary member 20 may be provided between an inlet 220 and an outlet 230 of a cooling member 200.

In an example, the auxiliary member 20 may include through holes 21. The through holes 21 may be penetrated in a first direction (e.g., the z-axis direction) corresponding to the venting direction. The through holes 21 may be further penetrated in a second direction (e.g., the x-axis direction) intersecting the first direction. The through holes 21 may be further penetrated in a third direction (e.g., the y-axis direction) intersecting the first and second directions.

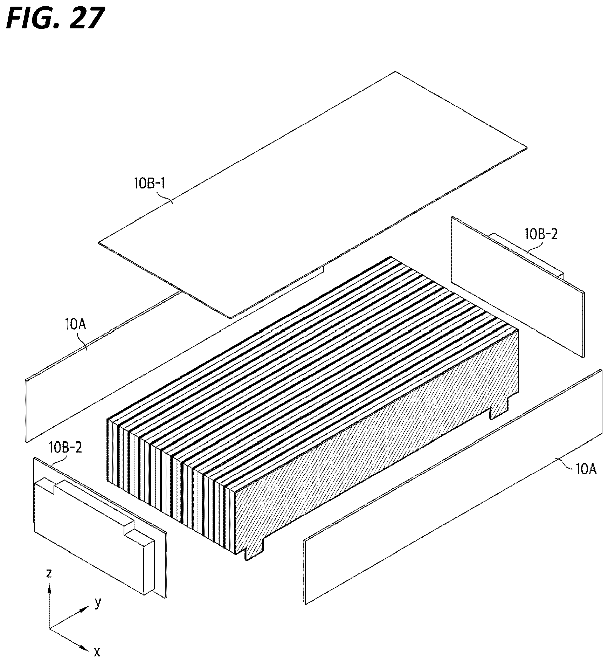

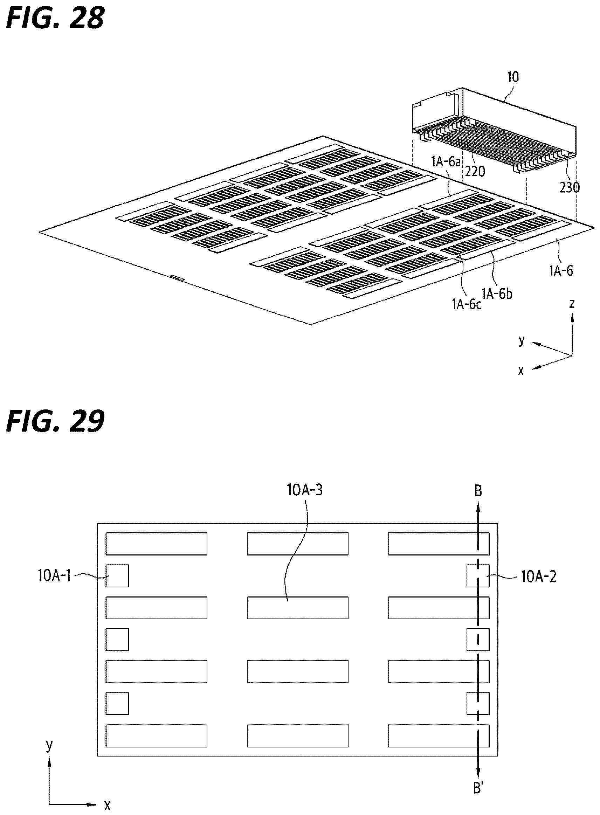

FIG. 27 is an exploded perspective view illustrating at least a portion of a battery assembly 10 according to an embodiment of the present application. FIG. 28 is an exploded perspective view illustrating at least a portion of the battery pack 1 according to an embodiment of the present application, in which a seating surface 1A-6 of the battery pack 1 is illustrated.

In an example, the housing 10A may cover the side surfaces of multiple battery cells 100 and cooling members 200, which are not covered by the cover members 10B-1 and 10B-2.

For example, the housing 10A may be configured to leave the bottom of the multiple battery cells 100 and the cooling members 200 open.

In an example, the bottom of a battery assembly 10 may be provided on the seating surface 1A-6, and some of the multiple battery cells 100 and cooling members 200 may be in contact with the seating surface 1A-6 due to the open bottom.

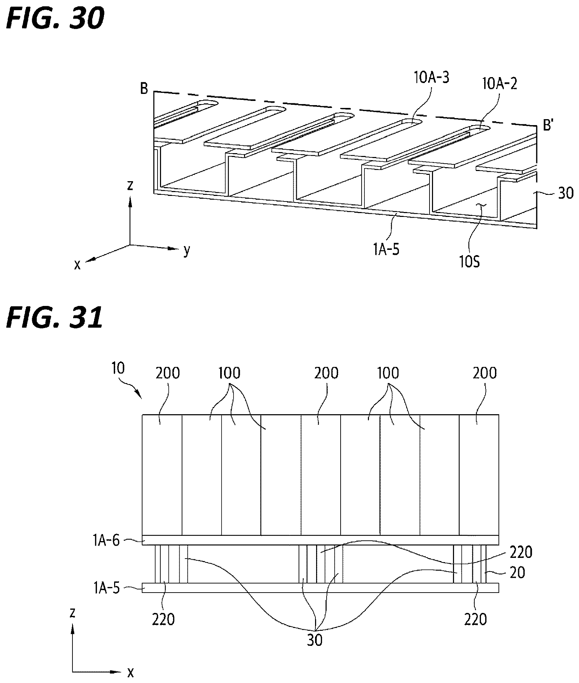

FIG. 29 is a cross-sectional view (XY plane) illustrating at least a portion of the battery assembly 10 according to an embodiment of the present application in which a portion of the housing 10A is illustrated. FIG. 30 is a view illustrating at least a portion of a battery pack 1 according to an embodiment of the present application, in which a cross-sectional view along line B-B' in FIG. 29 is illustrated. FIG. 31 is a cross-sectional view (XZ plane) illustrating at least a portion of a battery pack 1 according to an embodiment of the present application, illustrating that an auxiliary member 20 is provided.

In an example, at least one of a first hole 10A-1, a second hole 10A-2, and a third hole 10A-3 may be provided at the bottom of the housing 10A of the battery assembly 10.

For example, the first hole 10A-1 and the second hole 10A-2 may be formed to correspond to the area where a cooling member 200 is disposed in the battery assembly 10.

For example, the third hole 10A-3 may be formed to correspond to the area where the a battery cell 100 is disposed in the battery assembly 10.

This configuration allows efficient use of space and more effective cooling of the battery cell 100, while enabling the easy release of gases or dispersed substances generated from the battery cells 100 to the exterior.

In an example, there may be multiple third holes 10A-3, each of which is positioned to correspond to a region of one battery cell 100, and the multiple third holes 10A-3 may be spaced apart from each other in one direction (e.g., the x-axis direction).

For example, the first hole 10A-1 and the second hole 10A-2 may be spaced apart. The direction in which the first hole 10A-1 and the second hole 10A-2 are spaced apart may correspond to the one direction in which the multiple third holes 10A-3 described above are spaced apart *(e.g.,* the x-axis direction).

Although not illustrated separately, third holes 10A-3 may be further arranged between the first hole 10A-1 and the second hole 10A-2.

In an example, the battery pack 1 may include a venting space 10S between the pack support frame 1A-5 and the battery assembly 10, at a position corresponding to the position of the third hole 10A-3.

In another example, venting partitions 30 may be provided on the pack support frame 1A-5 to define the venting space 10S.

The venting space 10S may be defined between the venting partitions 30, at a position corresponding to the third hole 10A-3. For example, the inlet 220 and outlet 230 may be provided between the venting partitions 30, in a region other than the venting space 10S.

In an example, through the venting partitions 30, gases or dispersed substances may be easily released to the exterior, while preventing or suppressing, for example, the dispersed substances from affecting adjacent battery cells 100 or cell assemblies 100A or 100B. For example, the venting partitions 30 may allow the battery pack 1 to exclude the seating surface 1A-6.

A battery assembly 10 and a battery pack 1 according to an embodiment of the present application may be widely applied to green technology fields that use batteries, such as an electric vehicle, a battery charging station, including solar power generation and wind power generation. In addition, a battery assembly 10 and a battery pack 1 according to an embodiment of the present application may be applicable to, for example, an eco-friendly electric vehicle (EV) or hybrid vehicle (HV) to mitigate climate change by reducing air pollution and greenhouse gas emissions.

While various embodiments of the present disclosure have been described in detail above, the scope of the present disclosure is not limited thereto. It is evident to those ordinarily skilled in the art that various modifications and alterations are possible within the scope of the technical ideas of the present disclosure as defined in the claims. In addition, the above-described embodiments may be implemented by deleting some of the components, and respective embodiments may be implemented in combination with each other.

### [Description of Symbols]

- 1...: Battery pack
- 1A...: Pack housing
- 1A-1...: Pack outer wall frame
- 1A-2...: Pack side wall
- 1A-3...: Cross member
- 1A-4...: Electrical equipment space
- 1A-5...: Pack support frame
- 1A-6...: Seating surface
- 1A-6a: First seating surface hole
- 1A-6b: Second seating surface hole
- 1A-6c: Third seating surface hole
- 1B: Pack cover
- 1C: Coolantpipe
- 1C-1: Coolant inlet pipe
- 1C-2: Coolant outlet pipe
- S: Separation space
- 10: Battery assembly
- 10A: Housing
- 10A-1: First hole
- 10A-2: Second hole
- 10A-3: Third hole
- 10B: Cover member
- 10B-1: Upper cover member
- 10B-2: Side cover member
- 100...: Battery cell
- 100A: First cell assembly
- 100B: Second cell assembly
- 110: Cell assembly
- 120: Cell tab
- 130: First surface
- 200: Cooling member
- 210: Mainbody
- 211: Body portion
- 212: Coolant flow path
- 213: Gas pocket
- 214: Partition
- 215: Protruding surface
- 220: Inlet
- 221: Inletpath
- 230: Outlet
- 231: Outletpath
- 300: Busbar assembly

## Claims

1. A battery assembly comprising:
multiple battery cells; and
a cooling member interposed between the multiple battery cells,
wherein the cooling member includes;
a main body including a coolant flow path configured to allow coolant to flow therein,
an inlet configured to communicate with the coolant flow path and allow the coolant to flow in, and
an outlet configured to communicate with the coolant flow path and allow the coolant to flow out, and
wherein the inlet and the outlet extend from one surface of the main body corresponding to a venting direction of the multiple battery cells.

2. The battery assembly of claim 1, wherein the venting direction of the multiple battery cells corresponds to a direction in which a vent hole is formed in a housing that covers the multiple battery cells, the vent hole being configured to release venting gas generated from at least one of the multiple battery cells.

3. The battery assembly of claim 1, wherein the multiple battery cells include a first cell assembly and a second cell assembly, each of which includes two or more battery cells, and
wherein the cooling member is disposed between the first cell assembly and the second cell assembly.

4. The battery assembly of claim 3, wherein each of the first cell assembly and the second cell assembly has a ratio (L_{C}/L_{T}) of a long side length (L_{C}) to a short side length (L_{T}) that ranges from 1 to 100, or has a battery capacity that ranges from 50 Ah to 1,000 Ah.

5. The battery assembly of claim 1, wherein the main body further includes a gas pocket.

6. The battery assembly of claim 1, wherein the inlet and the outlet extend in a same direction from one surface of the main body.

7. The battery assembly of claim 6, wherein the inlet and the outlet protrude beyond one surface of the multiple battery cells positioned in parallel to one surface of the main body.

8. The battery assembly of claim 1, wherein multiple cooling members are provided,
wherein the inlets of respective multiple cooling members are arranged in a row such that at least a portion of the inlets face each other, and
wherein the outlets of respective multiple cooling members are arranged in a row such that at least a portion of the outlets face each other.

9. The battery assembly of claim 1, wherein at least a portion of the cooling member is in contact with a battery cell adjacent thereto.

10. The battery assembly of claim 1, wherein the cooling member includes an elastic material.

11. The battery assembly of claim 1, wherein the coolant flowing in the coolant flow path absorbs heat generated from at least a portion of the multiple battery cells.

12. A battery assembly comprising:
multiple battery cells; and
a housing that accommodates a cooling member interposed between the plurality of battery cells,
wherein the cooling member includes:
a main body including a coolant flow path configured to allow coolant to flow therein;
an inlet configured to communicate with the coolant flow path and allow the coolant to flow in; and
an outlet configured to communicate with the coolant flow path and allow the coolant to flow out, and
wherein the housing includes:
a first hole provided on one surface to allow at least a portion of the inlet to penetrate therethrough; and
a second hole provided on one surface to allow at least a portion of the outlet to penetrate therethrough.

13. The battery assembly of claim 12, further comprising:
a cover member configured to cover at least a portion of the housing.

14. The battery assembly of claim 12, wherein the first hole and the second hole are provided on one same surface of the housing.

15. The battery assembly of claim 12, wherein the housing further includes a third hole different from the first hole and the second hole.

16. A battery pack comprising:
a battery assembly including multiple battery cells and a cooling member interposed between the multiple battery cells;
a pack housing configured to provide an accommodation space that accommodates the battery assembly;
a coolant inlet pipe configured to introduce coolant into the battery assembly; and
a coolant outlet pipe configured to discharge the introduced coolant to an outside,
wherein the cooling member includes;
a main body including a coolant flow path configured to allow the coolant to flow therein,
an inlet configured to communicate with the coolant flow path and allow the coolant to flow in, and
an outlet configured to communicate with the coolant flow path and allow the coolant to flow out, and
wherein the coolant flow path communicates with the coolant inlet pipe and the coolant outlet pipe.

17. The battery pack of claim 16, wherein multiple battery assemblies are provided in plurality, and
wherein a coolant flow path of one of the multiple battery assemblies communicates with a coolant flow path of another battery assembly through at least one of the coolant inlet pipe and the coolant outlet pipe.

18. The battery pack of claim 16, wherein the pack housing includes a pack outer wall frame surrounding at least a portion of the battery assembly, and a pack support frame supporting the battery assembly within the accommodation space,
wherein the inlet and the outlet extend from one surface of the main body in a direction corresponding to a venting direction of the multiple battery cells, and
wherein the inlet and the outlet are provided in a separation space formed between the battery assembly and the pack support frame.

19. The battery pack of claim 18, further comprising:
a seating surface configured to seat the battery assembly thereon, the seating surface including a first seating surface hole configured to allow at least a portion of the inlet to penetrate therethrough, and a second seating surface hole configured to allow at least a portion of the outlet to penetrate therethrough,
wherein the seating surface is spaced a predetermined distance from the pack support frame.

20. The battery pack of claim 19, wherein the seating surface further includes a third seating surface hole different from the first seating surface hole and the second seating surface hole
